(19) **Europäisches Patentamt**
**European Patent Office**
**Office européen des brevets**

(11) **EP 4 718 254 A1**

(12) **EUROPEAN PATENT APPLICATION**

(43) Date of publication:
**01.04.2026 Bulletin 2026/14**

(51) International Patent Classification (IPC):
***G06F 9/54*** *(2006.01)*

(21) Application number: **24202524.5**

(22) Date of filing: **25.09.2024**

(52) Cooperative Patent Classification (CPC):
**G06F 9/541; G06F 9/547**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **Hegazy, Shady**
  **91052 Erlangen (DE)**
• **Bäuml, Daniel**
  **92348 Berg bei Neumarkt in der Oberpfalz (DE)**

(74) Representative: **Siemens Patent Attorneys**
**Postfach 22 16 34**
**80506 München (DE)**

(54) **A METHOD FOR COMMUNICATING BETWEEN A FIRST ELECTRONIC COMPUTING DEVICE AND A SECOND ELECTRONIC COMPUTING DEVICE OF A SYSTEM USING AN LLM AND FUNCTION CALLING, A COMPUTER PROGRAM PRODUCT, A COMPUTER-READABLE STORAGE MEDIUM, AS WELL AS A SYSTEM**

(57) The invention relates to a method for communicating between a first electronic computing device (12) and a second electronic computing device (14) of a system (10), comprising the steps of: providing the first electronic computing device (12) with a large language model (16) for receiving a natural input (30) from a user (28) of the system (10) or for generating a natural output (32) for the user (28); providing the second electronic computing device (14) at least with an Application Program Interface (34) for communicating with at least one microservice (18, 20, 22); transforming the natural input (30) in an Application Program Interface readable format for the Application Program Interface (34) by a transformation module (36) or transforming an output of the Application Program Interface (34) in a large language model readable format for the large language model (16) by the transformation module (36); and transmitting the Application Program Interface readable format to the Application Program Interface (34) for communicating with the microservice (18, 20, 22) or transmitting the large language model readable format to the large language model (16) for generating the natural output (32) for the user (28). Furthermore, the present invention relates to a computer program product, a computer-readable storage medium, as well as to a system (10).

FIG 1

**Description**

A method for communicating between a first electronic computing device and a second electronic computing device of a system, a computer program product, a computer-readable storage medium, as well as a system

The present invention relates to a method for communicating between a first electronic computing device and a second electronic computing device of a system according to the pending claim 1. Furthermore, the present invention relates to a corresponding computer program product, a corresponding computer-readable storage medium, as well as to a corresponding system.

In so-called API-agnostic (application program interface) standard for orchestrating the process of interaction between application programming interfaces and agents of large language model may be provided. The standard aims at streamlining the type of interaction without having the overhead of defining the interaction protocol for each case. Solving this problem enables application developers, users, software architects, and other stakeholders to focus more on leveraging large language model agents for their use cases without spending significant effort on the initiation and the maintenance of the communication protocols needed to give those agents access to the APIs they need to use in order to accomplish the use case.

Application programming interfaces are not generally designed and implemented to allow natural language inputs or outputs. Furthermore, leveraging the power of large language model agents requires these agents to be able to perform tasks and acquire knowledge using APIs for corresponding services. Achieving this interaction requires ad-hoc and per-case adaptions either on the API side or the large language model agent side. There is no comprehensive standard protocol that organizes and facilitates such interaction. There is no mutually recognized protocol to express natural text needs of API consumers or requests. Furthermore, there is no mutually recognized protocol to express natural text input/output capabilities of APIs.

With the current state of the art, APIs as well as large language models are only used separately. That means for converting a technical response that an API produces to an understandable natural text, a human interaction is necessary. This can be done by a developer that creates and transforms data models which are processed by an API. Afterwards, the process data can be made visible via a user interface.

Similar existing techniques that include large language models as well as API can generate API specific code out of natural text. For example, a user can give input to a large language model and let him generate programming code for specific implementation of API endpoints. However, the support natural text input and output to API endpoints during operation and not during the development is not provided in the state of the art.

The existing state of the art solve this problem by having large language model agents or end user locate, identify, analyze and use the API-specific and endpoint-specific design, syntax, input parameters, and output formats. These processes must be repeated for each API and each endpoint because a certain API or endpoint may get altered between the current call and the last call made by the agent/end user. Furthermore, different APIs or endpoints have different designs, syntax, and input parameters, and output parameters. Again, the same must be done for the response, too. The pursing and understanding of the response require locating, identifying, analyzing the API-specific, endpoint-specific output format, and syntax.

There is no communication protocol regarding conveying the natural language needs of the requesters, or the natural language capabilities of the API or the endpoints.

Therefore, it is an object of the present invention to provide a method, a corresponding computer program product, a corresponding computer-readable storage medium, as well as a corresponding system, by which the communication of a first electronic computing device with a second electronic computing device of the system can be improved.

This object is solved by a method, a corresponding computer program product, a corresponding computer-readable storage medium, as well as a corresponding system according to the independent claims. Advantageous embodiments are presented in the dependent claims.

One aspect of the invention relates to a method for communication between a first electronic computing device and a second electronic computing device of a system. The first electronic computing device is provided with a large language model for receiving a natural input from a user of the system or for generating a natural output for the user. The second electronic computing device is provided with at least an Application Program Interface (API) or communicating with at least one microservice. The natural language input is transformed in an Application Program Interface readable format for the application program interface by a transformation module or an output of the Application Program Interface is transformed in a large language model readable format for the large language model by the transformation module. The Application Program Interface readable format is transmitted to the Application Program Interface for communicating with the microservice or the large language model readable format is transmitted to the large language model for generating natural output for the user.

Therefore, the invention describes components, in particular, the first electronic computing device and the second electronic computing device that need to interact with each other. According to the state of the art in such a system a server and a so-called client component which exchange API requests and responses are provided. For example, the client may be the first electronic computing device, and the server may be the second electronic computing device. On the server side, some application logic is to find that deals with the business logic corresponding to the application use case. The second electronic computing device may provide all API endpoints for that scenario.

For making API endpoints natural text capable the transformation module, which may also be regarded as a so-called grammar inference layer, is provided. This transformation module may handle the transformation from natural text input to a technical format the API can process and the other way around to generate natural text output. The transformation module can be implemented using different algorithm, in particular on specific level needed.

In particular, an API is a set of rules and protocols that allows different software applications to communicate with each other. It defines the methods and data formats that a program can use to request services from another program or system. For example, when you use a mobile app to check the weather, the application sends a request to a weather API to get the current weather information for the location. The API then returns the requested data in a format that the application can understand and display it. API's are commonly used to enable integration between different software systems, such as when a website uses a payment gateway API to process online transactions or when a company's internal system is connected through an API to share data and functionality. API's can be implemented using various technologies and programming languages, and they come in many forms, including web API's, desktop API's, mobile API's.

In contrast to existing API's according to the state of the art, with the provided solution it is no longer necessary to understand the technical requirements of integrating API's into a certain system. With prior approaches specific know-how was need by the developers to integrate API endpoints in the dependence of the use case they wanted to implement.

The invention described leads to several advantages. In particular, an easy integration of API endpoints for developers due to reduce technical no-how is needed. Furthermore, the API endpoint usage may be opened to non-technical users since natural text can be used as input/output. Furthermore, less data transformation steps are required to show data from API endpoints to a user via a user interface. The main advantage is that it addresses the needs of large language model agents, as natural language speaking persons. Unleashing the potential of large language model agents to use more API's with ease, which will increase their capabilities and productivity exponentially.

A large language model, which may also be called language model, is in particular be referred to the context of natural language processing (NLP) and artificial intelligence (AI). A large language model is a type of artificial intelligence model that is trained on large amounts of text data to understand patterns, structures, and meaning in human language. A large language model typically refers to a model that has been trained on an extremely large dataset, often consisting of billions or even trillions of words. These models are capable of generating humanlike texts, translating languages, summarizing documents, answering questions, and performing other language-related tasks with high accuracy and fluency. Large language models have many potential applications in areas such as a customer service, content creation, education and research. However, they also raise ethical, and society consensus related to bias, misinformation, and job displacement. As such, a large language model is an important approach to develop deployment of large language models with care under consideration of their potential impacts on individuals and society as a whole. Therefore, a large language model is used to train the systematic questioning techniques of the person. In another embodiment, the large language model is trained for role playing with persons. Role playing is a common technique used in language learning to simulate real-life conversations and scenarios. Role playing allows learners to practice speaking, listening and interacting with others in a safe and controlled environment. In the context of LLMs, role playing can be used to create interactive and immersive language learning experiences. For example, a large language model could generate personalized role-playing scenarios based on the learner's proficiency level, interests and goals. The person can then interact with the virtual character or AI-power chat board in realtime, practicing language skills and receiving feedback on the performance. Role-playing can help develop various soft skills that are essential for effective communication and relationship building. For simulating real-life conversations and scenarios, role-playing can help learners practice active listening, empathy, problem-solving, creativity, and adaptability. It can also help built cultural awareness and sensitivity, as learners are exposed to different perspective and world views through the virtual characters they interact with.

According to an embodiment, the Application Program Interface is provided as a gateway and is configured for communicating with a plurality of microservices. For example, the Application Program Interface may be part of the second electronic computing device, which may be for example configured as a backend server. The second electronic computing device may use just one Application Program Interface. The Application Program Interface is then connected to a plurality of microservices. Furthermore, the Application Program Interface may be communicating with the transformation module. Therefore, a plurality of microservices can communicate via the gateway with the first electronic computing device in an improved manner.

In another embodiment, the transformation module is provided connected to the gateway. For example, the transformation module may be connected directly to the gateway. Therefore, the plurality of microservices can use the Application Program Interface connected to the transformation module. Therefore, just one transformation module and one Application Program Interface as the gateway is needed in order to communicate with the first electronic computing device, in particular with the large language model of the first electronic computing device, and the plurality of microservices.

In another embodiment, the microservice is provided with the Application Program Interface and the transformation module. In particular, the microservice may comprise the Application Program Interface and the transformation module. Therefore, the microservice can directly send data to the Application Program Interface with a transformation module that can then be sent to the large language model of the first electronic computing device.

According to another embodiment, a plurality of microservices is provided. In particular, each microservice may provide the Application Program Interface and the transformation module. It is also possible, that microservices without the Application Program Interface and the transformation module may also be provided. Furthermore, it is possible, that some microservices are provided with the Application Program Interface and the transformation module, and some microservices are connected via a gateway according to the preceding aspect. Therefore, the large language model can communicate with a plurality of microservices and the microservices can be of different type.

In another embodiment, the natural output is generated as a structured natural text. A structured natural text is a type of text that has been organized or formatted in a specific way to make it easier to process or analyze using for example natural language processing (NLP) techniques. Structured natural text typical involves applying mark up or tags to the text to identify its various parts, such as headings, paragraphs, lists, and additives. Structured natural text can make it easier for NLP algorithms to extract relevant information from text, identify patterns, and perform other tasks such as semantical analysis, text classification, and language translation. It is commonly used in applications such as knowledge graphs, chatbots, and virtual assistants. Therefore, the natural output can be the structured natural text, and the user can get the information from the microservice in the structured natural text.

In another embodiment, the natural input is provided as a structured natural text. For example, the large language model can produce the structured natural text and transmit it to the transformation layer, wherein the transformation layer is configured for transforming the structured natural text into the API-readable format. Therefore, a user can make an input, which may be for example then transformed from the large language model into a natural input and transmitted to the transformation module. Therefore, an easy communication between the user and the microservice can be provided.

In another embodiment, the natural output is provided as a context-specific unstructured natural text. A context-specific unstructured natural text refers to a type of text that does not have any predefined structure of format, but whose meaning and interpretation depend on the context in which it appears. In other words, the same text can have different meanings depending on the situation, the audience, or the surrounding information. Context-specific unstructured natural text can be challenging for NLP algorithms to process because they require additional knowledge and reasoning capabilities beyond simple keyword matching or pattern recognition. To understand the meaning of such text, NLP systems may lead to incorporate information from external sources, use complex linguistic analysis techniques, or align machine-learning models trained on large data set of similar context. Examples of context-specific unstructured natural text include social media posts, customer reviews, emails, and conversational dialogues, where the meaning of the text often depends on a wide range of factors such as tone, emotion, background knowledge, and social norms.

In another embodiment, the natural input is provided as a context-specific unstructured natural text. Therefore, an easy communication between the user and the microservice can be provided. The user can put in the context-specific unstructured natural text and the natural language model as well as the transformation module will provide the information of the context-specific unstructured natural text in a format, readable for the Application Program Interface and therefore readable for the microservice. Therefore, an easy way for communicating between the user and the microservice is provided.

In another embodiment, the second electronic computing device is provided as a backend server and, in particular, the first electronic computing device is provided as a client. The so-called server-client structure is a common communication model used in distributed systems, where one device or process, in particular the server, may provide services, in particular the microservice, or resources to other devices or processes, in particular the so called clients, according to this embodiment the first electronic computing device. The first electronic computing device may send requests to the second electronic computing device, which processes the request and returns the requested information or performs the requested action. In this structure, the second electronic computing device typically runs a server program that listens for incoming client requests on a specific port and/or endpoint. When the first electronic computing device wants to communicate with the second electronic computing device, it sends a request to server's endpoint using communication protocol. The second electronic computing device then processes the request and returns the requested information or performs the requested action, often in the form of a response message. The first electronic computing device and the second electronic computing device can be located on the same machine or distributed across multiple machines, connected through a network such as the internet. In this case, the communication between the first electronic computing device and the second electronic computing device typically involves several layers of protocols, including transport layer protocols like TCP/IP, which insure that data is transmitted reliable and securely between the two endpoints. The server-client structure provides many benefits for distributed systems, such as scalability, flexibility, and security. Servers can handle more to the client requests simultaneously, allowing them to serve a large number of clients efficiently. Clients can also choose which servers to connect to based on their needs and preferences, providing flexibility and choice in the system. Additionally, servers can implement security measures such as authentication, encryption, and access control to protect sensitivity data and prevent unauthorized access.

According to another embodiment, the transformation format is preconfigured. For example, four different possible transformation formats can be provided. In particular, at least one of these transformation formats is preconfigured. Therefore, the transformation module automatically may transform the input/output in the correct format, usable for the first electronic computing device or the second electronic computing device.

In another embodiment, depending on the preconfiguration, the original output is generated, or the original input is transformed. Therefore, the natural output as well as the natural input may then comprise the correct format in order to be further processed by the first electronic computing device or the second electronic computing device.

In particular, the present invention is a computer-implemented method. Therefore, another aspect of the invention relates to a computer program product comprising program codes means for performing a method according to the proceeding aspect.

Furthermore, the present invention relates to a computer-readable storage medium comprising at least the computer program product according to the proceeding aspect.

A still further aspect of the invention relates to a system comprising at least one first electronic computing device and one second electronic computing device, wherein the system is configured for performing a method according to the proceeding aspect. In particular, the method is performed by the system.

Advantageous embodiments of the method are to be regarded as advantageous embodiments of the computer program product, the computer-readable storage mediums, as well as the system. The system therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more applicationspecific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The electronic computing device may in particular use the technique of NLP. NLP may use different technical methods for providing its service: Tokenization: This is the process of breaking down text into individual words or tokens. Tokenization is a fundamental step in NLP, as it allows us to analyze and manipulate text at the word level; Part-of-Speech Tagging: This is the process of labeling each word in a sentence with its corresponding part of speech (e.g., noun, verb, adjective, etc.). Part-of-speech tagging helps us understand the syntactic structure of a sentence and is often used as an intermediate step in more complex NLP tasks; Parsing: This is the process of analyzing the grammatical structure of a sentence to identify its subject, verb, object, and other grammatical relationships. Parsing is used to extract meaning from text and is often used in applications such as machine translation and sentiment analysis; Named Entity Recognition (NER): This is the process of identifying and categorizing named entities (e.g., people, organizations, locations) in text. NER is used in a variety of applications, including information extraction, question answering, and search. Sentiment Analysis: This is the process of analyzing text to determine its overall sentiment or emotion. Sentiment analysis is used in applications such as social media monitoring, customer feedback analysis, and brand reputation management. Machine Translation: This is the process of automatically translating text from one language to another. Machine translation uses techniques such as statistical machine learning and neural machine translation to generate translations that are increasingly accurate and idiomatic. Text Classification: This is the process of categorizing text into predefined categories based on its content. Text classification is used in applications such as spam filtering, topic modeling, and sentiment analysis. Information Extraction: This is the process of extracting structured information from unstructured text. Information extraction involves techniques such as named entity recognition, part-of-speech tagging, and parsing to identify and extract relevant information from text. Chatbots and Virtual Assistants: These are AI systems that use NLP to interact with users in natural language. Chatbots and virtual assistants are used in applications such as customer service, information retrieval, and personal assistance. Transfer Learning: This is a technique in NLP where pre-trained models are fine-tuned on specific tasks or domains. Transfer learning has been shown to be highly effective in NLP, allowing models to leverage large amounts of pre-existing knowledge and adapt to new tasks with minimal data.

In order to provide a robust NLP, training of the model is required. Training data is the input that is used to train NLP models. It typically consists of large amounts of text data, along with labels or annotations that indicate the desired output for each input. The quality and quantity of training data are critical factors in determining the performance of NLP models. There are several types of training data commonly used in NLP: Annotated Data: This is training data that has been manually labeled or annotated by human experts. For example, a dataset of product reviews might be annotated with sentiment labels (positive, negative, neutral) to train a sentiment analysis model; Synthetic Data: This is training data that is generated artificially, often using algorithms or templates. Synthetic data can be useful for tasks where annotated data is scarce or expensive to obtain. For example, a synthetic dataset of dialogues might be generated to train a chatbot model; Unsupervised Data: This is training data that does not have any associated labels or annotations. Unsupervised data can be used to train models for tasks such as clustering, topic modeling, and word embedding; Pre-trained Models: These are NLP models that have been pre-trained on large amounts of text data, often using unsupervised learning techniques. Pre-trained models can be fine-tuned on specific tasks or domains using transfer learning; Data Augmentation: This is a technique used to artificially increase the size and diversity of training data by applying transformations such as synonym replacement, insertion, deletion, and substitution. Data augmentation can help improve the robustness and generalization of NLP models; Data Balancing: This is a technique used to address class imbalance in annotated datasets. Class imbalance occurs when one class has significantly more examples than another class, leading to bias in the model. Data balancing techniques include oversampling, undersampling, and SMOTE (Synthetic Minority Over-sampling Technique); Data Cleaning: This is a preprocessing step used to remove noise and inconsistencies from training data. Data cleaning involves techniques such as spelling correction, punctuation normalization, and stopword removal; Data Splitting: This is the process of dividing the training data into separate sets for training, validation, and testing. The training set is used to train the model, the validation set is used to tune hyperparameters and prevent overfitting, and the test set is used to evaluate the final performance of the model.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

Therefore:

Fig. 1    shows a schematic block diagram according to an embodiment of a system; and

Fig. 2    shows another schematic block diagram according to the embodiment of the system.

In these figures the same elements are comprising the same reference signs.

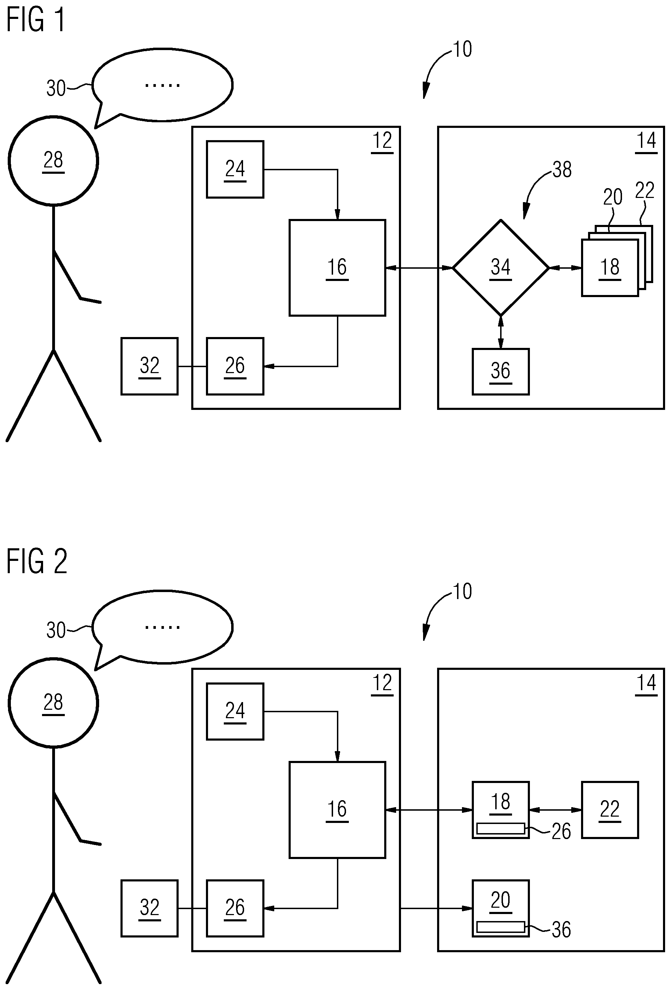

Fig. 1 shows a schematic block diagram according to an embodiment of a system 10. The system 10 comprises at least a first electronic computing device 12, which may also be regarded as a so-called client. Furthermore, the system 10 comprises a second electronic computing device 14, which may also be regarded as a so-called server, in particular a backend server.

The first electronic computing device 12 comprises a large language model 16. The second electronic computing device 14 may provide at least one microservice 18, 20, 22. As shown in the example, at least three microservices 18, 20, 22 are provided. In particular, a first microservice 18, a second microservice 20 as well as a third microservice 22 are shown.

The first electronic computing device 12 may further comprise at least one input device 24, for example a keyboard, a mouse or in particular, a microphone device. Furthermore, an output device 26 is shown, which may be for example a speaker device or a display device of the first electronic computing device 12.

Fig. 1 further shows a user 28. The user 28 may generate an input 30, in particular an audio input 30.

In particular, Fig. 1 shows a method for communicating between the first electronic computing device 12 and the second electronic computing device 14. The first electronic computing device 12 is provided with the large language model 16 for receiving a natural input 30 from the user 28 of the system 10 or for generating a natural output 32 for the user 28. The second electronic computing device 14 is provided with an Application Program Interface 34 for communicating with at least the one microservice 18, 20, 22. The natural language input 30 is transformed in an Application Program Interface-readable format for the Application Program Interface 34 by a transformation module 36 or the output of the Application Program Interface 34 is transformed in a large language model-readable format for the large language model 16 by the transformation module 36. The Application Program Interface readable format is transmitted to the Application Program Interface 34 for communicating with the microservice 18, 20, 22 or the large language model-readable format is transmitted to the large language model 16 for generating the natural output 32 for the user 28.

In particular, as shown in Fig. 1, the Application Program Interface 34 may be configured as a gateway 38 and is configured for communicating with a plurality of microservices 18, 20, 22. In particular, the transformation module 36 is then provided connected to the gateway 36.

Furthermore, the natural output 32 may be generated as a structured natural text. Furthermore, the natural input 30 may be provided as a structured natural text. Furthermore, the natural output 32 may be provided as a context-specific unstructured natural text. Furthermore, the natural input 30 may be provided as a context-specific unstructured natural text.

Furthermore, the transformation format is preconfigured. In particular, depending on the preconfiguration, the natural output 32 is generated or the natural input 30 is transformed.

In particular, the shown system 10 consists of several components that need to interact with each other. According to the state of the art, such a system 10 may comprise the server, which is the second electronic computing device 14, and the client, which is the first electronic computing device 12, which exchange API requests and responses. On the side of the second electronic computing device 14 there may be some application backend logic that deals with the business logic corresponding to the application use case. The second electronic computing device 14 may provide all API endpoints in this scenario.

For making the API endpoints natural text capable, the transformation module 36 is introduced, which may also be regarded as a so-called grammar inference layer. The transformation module 36 may handle the transformation from natural text input 30 to a technical format the API can process and the other way around to generate natural text output 32. The transformation module 36 can be implemented using one of the algorithms, which may be presented later.

In particular, the invention may provide a standard for clear expression of the API natural language input/output capabilities via for example a four-tiered classification system for API based on the accomplishment of specific tier-qualifying requirements. The four-tiered system clearly expresses to the requester/consumer of the API what natural language input/output the API is capable of. Furthermore, a specific set of requirements to benchmark API's natural language capabilities may be provided. Furthermore, the API language needs the API consumer/requester via a request metadata parameter, which may be called LINGA, that takes a numerical value expressing which tier capability is required for the request execution. A 0-tier enumeration is provided, to express no need for natural language adaptions, as in backward compatibility cases, inter-API communications, or when needed. Furthermore, a formula of a balancing requested natural capability level and the actual language capability of the API is provided.

Furthermore, protocols for the realization of the various levels of natural language communication may be for example centralized for a natural language enablement of a typical API. Furthermore, a protocol for decentralized natural language enablement of a typical API, as for example shown in Fig. 2, is provided.

The tier balancing formula may be provided as:

$$f(i, l) = \min(i, l)$$

where:

    *i = requested LINGA tier in the input.*
    *l = actual LINGA tier of the API.*

To insure the system 10 enables the support of natural language for API endpoints there are two architectural options, wherein one is shown in Fig. 1 and one is shown in Fig. 2. In Fig. 1 it is shown that an API gateway 38, which encapsulated the processing of natural language to technical API data, is provided.

Fig. 2 shows another schematic block diagram according to another embodiment of the system 10. In Fig. 2 it is shown, that each microservice 18, 20, 22 may interact on its own. However, exposing the microservice 18, 20, 22 without the gateway 38 means that each microservice 18, 20, 22 is required to implement the transformation module 36 specifically.

According to one algorithm, for example to generate or transform structured natural text the algorithm aims to optimize context-free grammar rules for generating structured natural responses from typical API responses. By leveraging a genetic algorithm approach and using pairs of API responses and corresponding natural text sentences as input, the algorithm iteratively evolves CFG rules (context-free grammar rules) to a currently map API responses to human-readable natural language expressions. Pairs of typical API responses and corresponding natural text sentences that represent the same information in human-readable form may be used as input. Optimized CFG rules for generating structure natural language response out of typical API responses may be generated as the output. Therefore, in a first step CFG rules may be defined. A set of initial CFG rules representing the synthetic structure of natural language sentences are specified. In a second step, a population of CFG rules are randomly initialized. In a third step the fitness of each CFG rule based on its ability to generate natural text sentences that correspond to the provided API responses are evaluated. In a fourth step the top-performing CFG rules as parents for the next generation are selected based on their fitness. Crossover and mutation operators are applied to the selected parents to produce offspring with variations in CFG rules in a fifth step. The third step until the fifth step may be repeated for a predefined number of generations or until a termination condition is mapped. The best-performing CFG rule from the final population is selected based on fitness evaluations. Sample sentences are generated using the best CFG rule. The optimized CFG rule and the sample sentences generated using the rule are returned. The algorithm may terminate after predefined number of generations or when convergence is achieved, for example when there is no significant improvement in fitness over successive generations.

Furthermore, a natural language to API request generation algorithm with model optimization can be provided. This algorithm may train a model to parse natural language inputs and generate corresponding API requests, using a data set of paired natural language prompts and API requests. Additionally, it incorporates the use of a human evaluator or a GAN for model optimization, insuring the generated API requests are accurate and symmetrically meaningful. As input, a data set of paired natural language prompts and corresponding API requests, as well as optional a human feedback or a GAN-generated data for model optimization may be used. As an output, a trained model capable of parsing natural language inputs and generating accurate API requests is generated. In a first step, a data preprocessing is provided. The data set is clean and preprocessed of paired natural language prompts and API requests, including tokenization, lowercasing, and removing stopwords and special correctors. Encoding the natural language prompts and API requests in dynamical representations suitable for training machine-learning models is provided. In a second step, the model selection is provided, wherein a suitable model and architecture for the task, such as sequence-to-sequence models, transformers or hybrid models are chosen. In a third step, model training is provided. The preprocessed data set is splitted into training, validation, and test sets. The selected model is trained on the training data set. In a fourth step an evaluation is provided. The trained model is evaluated on the validation set to assess its performance and ability to parse natural language inputs and generates accurate API requests. In a fifth step, a model optimization is provided. Feedback from a human evaluator or a generative adversarial network (GAN) is incorporated generating additional data for model optimization. Fine-tuning of the model based on the feedback received is provided. In a sixth step a final evaluation is provided. The optimized model is evaluated in the test set to validate its performance improvements. The metrics are compared with those obtained before optimization to assess the effectiveness of the optimization process. The trained and optimized model is deployed into the production environment to parse natural language inputs and generate API requests in a seventh step. In an eighth step monitoring maintenance is performed. The performance of the deployed model in production is monitored and feedback is collected. The model is retrained regularly, and the optimization process is reapplied to adapt to changes and user behavior and API specifications.

Furthermore, an algorithm for enabling context-aware in natural language API inputs/outputs may be provided. This algorithm aims to fine-tune a pre-trained large language model to parse natural language inputs in a context-aware manner in order to generate the appropriate API requests and generate context-aware natural language responses out of the typical API output. By leveraging transfer learning techniques and contextual embeddings, the algorithm adapts a large language model to understand and generate text that is sensitive to the surrounding context of the request. As an input, the pre-trained large language model is used. Furthermore, a data set of paired of context-aware natural language prompts and corresponding context-aware natural language outputs are used. As an output, the fine-tuned large language model capable of parsing context-aware natural language input and generating context-aware natural language outputs is provided. In a first step data pre-processing is provided. Cleaning and preprocessing the data set of paired context-aware natural language prompts and corresponding context-aware natural language outputs are provided. The text data is tokenized, and it is encoded into numerical representations suitable for training the large language model. In a second step, fine-tuning the setup is provided. A pre-trained large language model architecture suitable for the task is selected. The large language model is initialized with pre-trained weights and architecture. In a third step the fine-tuning procedure is provided. The large language model is fine-tuned on the data set of paired context-aware prompts and outputs using supervised learning techniques. Transfer learning strategies are utilized to adapt the large language model to understand and generate text in a context-aware manner. The model parameters are fine-tuned using appropriate loss functions and optimization algorithm, for example cross-entropy loss, or Adam optimizer. In a fourth step the fine-tuned large language model is evaluated on a separate validation or test data set to assess its performance. The model's ability is evaluated to parse context-aware natural language input and generate context-aware natural language outputs. In a fifth step model optimization is provided. The feedback is incorporated from a human evaluator or automatic evaluation techniques are used to identify areas for improvement in the fine-tuned large language model. The model is further fine-tuned based on the feedback received, aiming to enhance its context-awareness and language generation capabilities. A sixth step is the final evaluation. The optimized large language model is evaluated on a held-out text data set to validate its performance improvements. The metrics are compared with those obtained before optimization to assess the effectiveness of the fine-tuning process. In a seventh step the model is deployed. The fine-tuned large language model is deployed in the production environment. In an eighth step monitoring maintenance is provided. The performance of the deployed model is monitored in the production and feedback from users and system logs are collected. The model is regularly re-trained on updated data sets and the fine-tuning process is re-applied to adapt the changes in usable behavior and language patterns.

For example, for the first tier level 1, an industrial plant where a mechanic is working the production can be imagined. The mechanic can work on different production lines and products, for example a motor engine. When attaching parts to the product the mechanic may get the corresponding individual components from another production line. In order to monitor the supply status of the components he needs to finish the product the mechanic can interact with a monitoring system that reflects a digital twin version of the product and the missing components. With the system 10 he can send now a request to the monitoring system by interacting with the first electronic computing device 12 and sends the information he wants to retrieve by using a predefined request that is giving for the system 10. However, the response he will get with the system 10 is not predefined by the monitoring software but may be processed with the algorithm and produces an output that the mechanic can understand immediately, in particular in form of natural text, without having knowledge about the monitoring system itself.

For example, a production line monitoring software uses the group of large language models 16 to aid production activities. An operator uses the software to accomplish an assembly. One large language model agent fetches the documentation of the API and learns how so send the predefined http request, in particular with the tier level 1 parameter, to get missing components of the engine. The response may be for example, "You need to attach five screws to finish the assembly". As the result, the large language model 16 updates the operator with the required information.

As an example for tier level 2, the request that is sent by the large language model 16 is changed with the monitoring software. The user 28 uses the software to accomplish an assembly. One large language model 16 within the monitoring software directly sends the below request "How many parts are missing to finish the assembly" the response may be for example "You need to attach five screws to finish the assembly".

An example for the tier level 3 is that more context information will be added to provide more actionable and productive response to the user 28. For example, the question may be "What parts are missing to finish the product". The response of the system 10 may be for example, "You need to attach five screws to finish the assembly. But these will be delivered by the supply production line in seven minutes. You can speed up the process but picking up the parts directly, which saves four minutes based on your location".

**Claims**

1. A method for communicating between a first electronic computing device (12) and a second electronic computing device (14) of a system (10), comprising the steps of:

   - providing the first electronic computing device (12) with a large language model (16) for receiving a natural input (30) from a user (28) of the system (10) or for generating a natural output (32) for the user (28);
   - providing the second electronic computing device (14) at least with an Application Program Interface (34) for communicating with at least one microservice (18, 20, 22);
   - transforming the natural input (30) in an Application Program Interface readable format for the Application Program Interface (34) by a transformation module (36) or transforming an output of the Application Program Interface (34) in a large language model readable format for the large language model (16) by the transformation module (36); and
   - transmitting the Application Program Interface readable format to the Application Program Interface (34) for communicating with the microservice (18, 20, 22) or transmitting the large language model readable format to the large language model (16) for generating the natural output (32) for the user (28).

2. A method according to claim 1, wherein the Application Program Interface (34) is provided as a gateway (38) and is configured for communicating with a plurality of microservices (18, 20, 22).

3. A method according to claim 2, wherein the transformation module (36) is provided connected to the gateway (38).

4. A method according to any one of claims 1 to 3, wherein
the microservice (18, 20, 22) is provided with the Application Program Interface (34) and the transformation module (36).

5. A method according to claim 4, wherein
a plurality of microservices (18, 20, 22) is provided.

6. A method according to any one of claims 1 to 5, wherein
the natural output (32) is generated as a structured natural text.

7. A method according to any one of claims 1 to 6, wherein
the natural input (30) is transformed into a structured natural text.

8. A method according to any one of claims 1 to 7, wherein
the natural output (32) is provided as a context specific unstructured natural text.

9. A method according to any one of claims 1 to 8, wherein
the natural input is transformed into a context specific unstructured natural text.

10. A method according to any one of claims 1 to 9, wherein
the second electronic computing device (14) is provided as a backend server.

11. A method according to any one of claims 1 to 10, wherein
the transformation format is preconfigured.

12. A method according to claim 11, wherein
depending on the preconfiguration the natural output (32) is generated or the natural input (30) is transformed.

13. A computer program product comprising program code means for performing a method according to any one of claims 1 to 12.

14. A computer-readable storage medium comprising at least the computer program product according to claim 13.

15. A system (10) comprising at least one first electronic computing device (12) and one second electronic computing device (14), wherein the system (10) is configured for performing a method according to any one of claims 1 to 12.

FIG 1

FIG 2

| | Europäisches Patentamt European Patent Office Office européen des brevets | **EUROPEAN SEARCH REPORT** | **Application Number** EP 24 20 2524 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN JINYUAN ET AL: "ChatMol Copilot: An Agent for Molecular Modeling and Computation Powered by LLMs", PROCEEDINGS OF THE 1ST WORKSHOP ON LANGUAGE + MOLECULES (L+M 2024), [Online] 15 August 2024 (2024-08-15), pages 55-65, XP093252542, DOI: 10.18653/v1/2024.langmol-1.7 Retrieved from the Internet: URL:https://aclanthology.org/2024.langmol-1.7.pdf> [retrieved on 2025-02-20] * Sections C.2, B.2, 2.2, B.5, * * figures 1-3; table 1 * ----- | 1-15 | INV. G06F9/54 |
| A | CN 118 012 940 A (ZICHANG TECH BEIJING CO LTD) 10 May 2024 (2024-05-10) * claims 1, 2 * ----- | 1-15 | |
| A | SHISHIR G PATIL ET AL: "Gorilla: Large Language Model Connected with Massive APIs", ARXIV.ORG, CORNELL UNIVERSITY LIBRARY, 201 OLIN LIBRARY CORNELL UNIVERSITY ITHACA, NY 14853, 24 May 2023 (2023-05-24), XP091518393, * abstract; figures 3,6 * ----- | 1-15 | TECHNICAL FIELDS SEARCHED (IPC) G06F |
| A | YUJIA QIN ET AL: "ToolLLM: Facilitating Large Language Models to Master 16000+ Real-world APIs", ARXIV.ORG, CORNELL UNIVERSITY LIBRARY, 201 OLIN LIBRARY CORNELL UNIVERSITY ITHACA, NY 14853, 3 October 2023 (2023-10-03), XP091628653, * abstract; figure 4 * ----- -/-- | 1-15 | |

The present search report has been drawn up for all claims

| Place of search | Date of completion of the search | Examiner |
|---|---|---|
| Munich | 20 February 2025 | Hoareau, Samuel |

EPO FORM 1503 03.82 (P04C01)

**page 1 of 2**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZEKUN LI ET AL: "Large Language Models as Zero-shot Dialogue State Tracker through Function Calling", ARXIV.ORG, CORNELL UNIVERSITY LIBRARY, 201 OLIN LIBRARY CORNELL UNIVERSITY ITHACA, NY 14853, 30 May 2024 (2024-05-30), XP091743753, * abstract; figures 2-4 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 20 February 2025 | Hoareau, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2524

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| CN 118012940 A | 10-05-2024 | NONE | |

EPO FORM P0459

For more details about this annex : see Official Journal of the European Patent Office, No. 12/82